(19) Europäisches Patentamt
European Patent Office
Office européen des brevets

(11) **EP 2 985 524 A1**

(12) **EUROPÄISCHE PATENTANMELDUNG**

(43) Veröffentlichungstag:
**17.02.2016  Patentblatt 2016/07**

(51) Int Cl.:
***F21S 8/12*** *(2006.01)*

(21) Anmeldenummer: **15179528.3**

(22) Anmeldetag: **03.08.2015**

| | |
|---|---|
| (84) Benannte Vertragsstaaten:<br>**AL AT BE BG CH CY CZ DE DK EE ES FI FR GB GR HR HU IE IS IT LI LT LU LV MC MK MT NL NO PL PT RO RS SE SI SK SM TR**<br>Benannte Erstreckungsstaaten:<br>**BA ME**<br>Benannte Validierungsstaaten:<br>**MA**<br><br>(30) Priorität: **12.08.2014  AT 505622014**<br><br>(71) Anmelder: **Zizala Lichtsysteme GmbH**<br>**3250 Wieselburg (AT)** | (72) Erfinder:<br>• **Reinprecht, Markus**<br>  **3202 Hofstetten (AT)**<br>• **Reisinger, Bettina**<br>  **3300 Amstetten (AT)**<br><br>(74) Vertreter: **Patentanwaltskanzlei**<br>**Matschnig & Forsthuber OG**<br>**Biberstraße 22**<br>**Postfach 36**<br>**1010 Wien (AT)** |

(54) **SCHEINWERFER FÜR KRAFTFAHRZEUGE MIT LASEREINHEIT**

(57)    Ein Scheinwerfer für Kraftfahrzeuge mit zumindest einer Lasereinheit (2), bestehend aus einem Laser (2a) und einer nachgeordneten Optik (2b), deren Laserstrahlung (3, 3') auf zumindest eine Lichtkonversionseinheit (1) gelenkt wird, welches einen zwischen zwei Abdeckungen eingeschlossenen Phosphor (4) zur Lichtkonversion aufweist, und mit einem Projektionssystem (9) zur Projektion des an der zumindest einen Lichtkonversionseinheit erzeugten Leuchtbildes auf die Fahrbahn, wobei eine vordere, in Abstrahlrichtung vorne gelegene lichtdurchlässige Abdeckung (6) des Phosphors (4) als lichtformendes Element gestaltet ist.

*Fig. 6*

EP 2 985 524 A1

## Beschreibung

Die Erfindung bezieht sich auf einen Scheinwerfer für Kraftfahrzeuge mit zumindest einer Lasereinheit, bestehend aus einem Laser und einer nachgeordneten Optik, deren Laserstrahlung auf zumindest eine Lichtkonversionseinheit gelenkt wird, welches einen zwischen zwei Abdeckungen eingeschlossenen Phosphor zur Lichtkonversion aufweist, und mit einem Projektionssystem zur Projektion des an der zumindest einen Lichtkonversionseinheit erzeugten Leuchtbildes auf die Fahrbahn.

Der Einsatz von Laserlichtquellen in Kraftfahrzeugen gewinnt derzeit an Bedeutung, da insbesondere Laserdioden flexiblere und effizientere Lösungen ermöglichen, wodurch auch die Leuchtdichte des Lichtbündels sowie die Lichtausbeute erheblich gesteigert werden kann.

Bei den bekannten Lösungen wird allerdings kein direkter Laserstrahl emittiert, um eine Gefährdung von Menschen und anderen Lebewesen, insbesondere von Augen, durch den extrem gebündelten Lichtstrahl hoher Leistung zu vermeiden. Der Laserstrahl wird vielmehr auf einen zwischengeschalteten Konverter, der ein Lumineszenzkonversionsmaterial, kurz "Phosphor" genannt, enthält, geleitet und von diesem von z.B. blauem Licht in vorzugsweise "weißes" Licht umgewandelt, insbesondere so, dass in Überlagerung mit der gestreuten Laserstrahlung ein gesetzeskonformer Weißlichteindruck entsteht.

In Zusammenhang mit der vorliegenden Erfindung wird Unter "Phosphor" ganz allgemein ein Stoff oder eine Stoffmischung verstanden, welche Licht einer Wellenlänge in Licht einer anderen Wellenlänge oder eines Wellenlängengemisches, insbesondere in "weißes" Licht, umwandelt, was unter dem Begriff "Wellenlängenkonversion" subsumierbar ist. Dabei wird unter "weißes Licht" Licht einer solchen Spektralzusammensetzung verstanden, welches beim Menschen den Farbeindruck "weiß" hervorruft. Der Begriff "Licht" ist natürlich nicht auf für das menschliche Auge sichtbare Strahlung eingeschränkt.

Für das Lichtkonversionsmittel kommen auch Optokeramiken in Frage, das sind transparente Keramiken, wie beispielsweise YAG-Ce (ein Yttrium-Aluminium-Granat mit Cer dotiert).

Beispielsweise geht aus der US 2012/0140504 A1 ein Scheinwerfer der gegenständlichen Art hervor, bei welchem die Strahlen eines oder mehrerer Laser auf eine Lichtkonversionseinheit gerichtet sind, bei welchem der Phosphor von einem fluoreszierendem Oxinitrid und einem fluoreszierendem III-V Halbleiter in Nanopartikelform, z.B. InP, gebildet und dichtend in ein Glasmaterial, wie Saphir, Zirkon, AlN oder TiO2 eingeschlossen ist.

Aus der EP 2 063 170 A2 ist ein anderer Scheinwerfer der eingangs genannten Art für Kraftfahrzeuge bekannt geworden, bei welchem zum Ausleuchten der Fahrbahn mit einem blendfreien adaptiven Fernlicht bestimmte Bereiche in Abhängigkeit von anderen Verkehrsteilnehmern bzw. in Abhängigkeit von Umgebungsparametern, wie Eigengeschwindigkeit; Stadt/Freiland/Autobahn, Wetter, Dämmerung etc. ausgespart werden können. Der Strahl eines Lasers wird über einen in zumindest zwei Raumrichtungen bewegbaren Mikrospiegel auf eine Leuchtfläche gelenkt, die zur Konvertierung des Laserlichtes in vorzugsweise weißes Licht einen Phosphor enthält. Mittels einer Linse wird das Leuchtbild der Leuchtfläche auf die Fahrbahn projiziert.

Die DE 10 2012 206 970 A1 zeigt eine Beleuchtungseinrichtung, die für verschiedene Zwecke eingesetzt werden soll, darunter auch bei Kraftfahrzeugen, wobei das Licht einer Laserdiode auf eine Lichtkonversionseinheit trifft, das eine der Laserdiode zugewandte Licht streuende Beschichtung, z.B. aus Aluminiumoxidpartikeln, besitzt und an der gegenüberliegenden Seite von einer transparenten Wärmesenke, z.B. aus Saphir, abgedeckt ist. Wohin das abgestrahlte, diffuse Licht gerichtet wird, geht aus diesem Dokument allerdings nicht hervor.

Ein Problem bei bekannten Lichtkonversionseinheiten liegt darin, dass das von dem transmissiven Phosphor abgestrahlte Licht typischerweise "lambertsch" abgestrahlt wird, womit gemeint ist, dass gemäß dem Gesetz von Lambert, die von einem kleinen Flächenstück ausgesandte Lichtmenge dem Kosinus des Betrachtungswinkels bezüglich der Oberflächennormale proportional ist. Dadurch geht aber bei der Abbildung der Leuchtfläche auf die Straße viel Licht in den Randbereichen verloren und zur Effizienzsteigerung ist eine möglichst große Linse (Optik) erforderlich, was jedoch gerade bei Kraftfahrzeugen nicht praktikabel ist.

Es ist demnach eine Aufgabe der Erfindung, einen Scheinwerfer für Kraftfahrzeuge zu schaffen, bei welchem zuvor beschrieben Lichtverlust entgegengewirkt wird, ohne dass man baulich große Projektionssysteme benötigt.

Diese Aufgabe wird mit einem Scheinwerfer der eingangs genannten Art gelöst, bei welchem erfindungsgemäß die vordere, in Abstrahlrichtung vorne gelegene lichtdurchlässige Abdeckung des Phosphors als lichtformendes Element gestaltet ist.

Wenn im Rahmen dieser Beschreibung die Begriffe "vorne" und "hinter" im Zusammenhang mit der Lichtkonversionseinheit verwendet werden, so sind sie so zu verstehen, dass "vorne" die dem Laser abgewandte Seite des Phosphors bedeutet, an welcher das konvertierte Licht abgestrahlt wird, wogegen "hinten" an jener Seite des Phosphors bedeutet, welche dem Laser zugewandt ist. Falls die Hinterseite der Lichtkonversionseinheit beispielsweise nicht verspiegelt ist, leuchtet der Phosphor auch in den hinteren Halbraum. Mit der Vorder- bzw. Hinterseite des Kraftfahrzeuges müssen sich diese Begriffe nicht notwendigerweise in Einstimmung befinden.

Bei einer zweckmäßigen, einfach realisierbaren Variante ist vorgesehen, dass die vordere Abdeckung eine Sammellinse aufweist.

Dabei kann mit besonderem Vorteil die Sammellinse mit der vorderen Abdeckung einstückig ausgebildet sein.

Bei einer günstig herstellbaren Ausführung kann vorgesehen sein, dass die Außenseite der Sammellinse konvex ist.

Um den lichttechnischen Gestaltungsspielraum zu erweitern kann es sinnvoll sein, wenn an der Vorderseite der vorderen Abdeckung eine Vielzahl von Einzellinsen vorgesehen ist, wobei in diesem Fall mit Vorteil die Einzellinsen mit der vorderen Abdeckung einstückig ausgebildet sind.

Des Weiteren können zweckmäßigerweise die Einzellinsen gleich ausgebildet sein und ihre optischen Achsen parallel zueinander verlaufen.

Bei einer praxistauglichen Variante ist vorgesehen, dass die dem Phosphor zugewandte Fläche der vorderen Abdeckung im Wesentlichen eben ist.

Eine äußerst zweckmäßige Variante zeichnet sich dadurch aus, dass ein von einer Strahlablenkansteuerung angesteuertes Strahlablenkmittel vorgesehen ist, über welches der Laserstrahl der zumindest einen Laserlichtquelle umgelenkt und als scannender Laserstrahl auf den Phosphor der zumindest einen Lichtkonversionseinheit gelenkt wird. Dabei ist mit Vorteil das Strahlablenkmittel als Mikrospiegel ausgebildet.

Die Erfindung samt weiterer Vorteile ist im Folgenden an Hand beispielsweiser Ausführungsformen näher erläutert, die in der Zeichnung veranschaulicht sind. In dieser zeigen

Fig. 1 schematisch und in schaubildlicher Darstellung eine Lichtkonversionseinheit eines Scheinwerfers gemäß der Erfindung und eine Laserlichtquelle in einer ersten Ausführungsform,

Fig. 2 eine schematische Darstellung der optischen Geometrie einer Anordnung gemäß der Erfindung,

Fig. 3 in einer Abbildung wie Fig. 1 eine Lichtkonversionseinheit eines Scheinwerfers gemäß der Erfindung und eine Laserlichtquelle in einer zweiten Ausführungsform,

Fig. 3a ein vergrößertes Detail der Fig. 3,

Fig. 4 in einer schematischen Seitenansicht eine Lichtkonversionseinheit eines Scheinwerfers gemäß der Erfindung und eine Laserlichtquelle sowie eine Projektionslinse,

Fig. 5 in einer Darstellung wie Fig. 4 eine Lichtkonversionseinheit eines Scheinwerfers gemäß der Erfindung und eine Laserlichtquelle mit scannendem Laserstrahl sowie eine Projektionslinse,

Fig. 6 in einer schematischen Seitenansicht eine Ausführung ähnlich Fig. 5 jedoch mit einer anders gestalteten vorderen Abdeckung des Phosphors,

Fig. 7 die Ausführung der Erfindung nach Fig. 6 in schaubildlicher Darstellung,

Fig. 8 in einer Ansicht wie Fig. 7 eine Variante der Ausführung der Fig. 7, und

Fig. 8a ein vergrößertes Detail der Fig. 8.

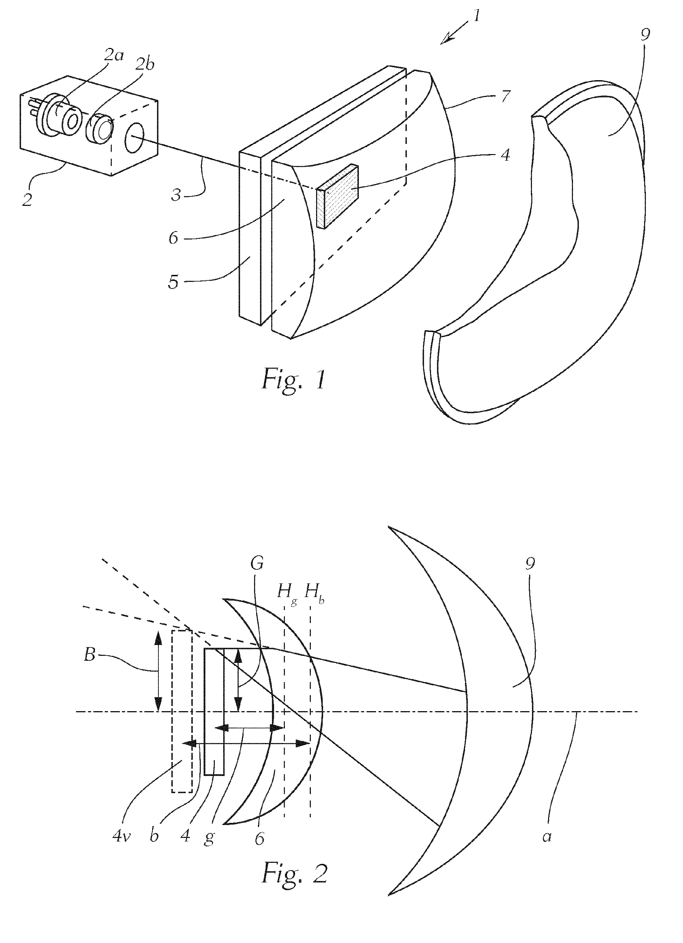

In Fig. 1 ist eine Lichtkonversionseinheit 1 dargestellt, die zur Umwandlung des Lichtes einer Lasereinheit 2 dient, die einen Laserstrahl 3 auf den Phosphor 4 sendet. Die Lasereinheit 2 besteht aus dem eigentlichen Laser 2a und einer diesem nachgeordneten Optik 2b, was in Fig. 1 nur angedeutet ist. Die Optik 2b kann entsprechend dem verwendeten Laser und der gewünschten Strahlgeometrie ausgebildet sein. Der Laserstrahl 3 kann, was nicht dargestellt ist, entsprechend aufgeweitet sein, damit das abgestrahlte Laserlicht den gesamten Phosphor 4, hier dargestellt als rechteckiges Plättchen ausleuchtet. Der Phosphor ist transmissiv, d.h. das in dem Phosphor umgewandelte Laserlicht, dessen Wellenlänge insbesondere im blauen oder UV-Bereich liegt, wird in dem Phosphor 4 umgewandelt und strahlt nach vorne in der gewünschten Farbmischung, bevorzugt "weiß", ab. Hier ist anzumerken, dass Varianten nicht auszuschließen sind, bei welchen auch ein Teil des Laserlichts, den Phosphor durchsetzend, nach vorne abgestrahlt wird.

Man verwendet für den Phosphor beispielsweise Lumineszenz-Farbstoffe, wobei die Ausgangswellenlänge im Allgemeinen kürzer und damit energiereicher als das emittierte Wellenlängengemisch ist. Der gewünschte Weißlichteindruck entsteht durch additive Farbmischung. Dabei wird unter "weißes Licht" Licht einer solchen Spektralzusammensetzung verstanden, welches beim Menschen den Farbeindruck "weiß" hervorruft. Der Begriff "Licht" ist natürlich nicht auf für das menschliche Auge sichtbare Strahlung eingeschränkt.

Der Phosphor 4 ist zwischen zwei lichtdurchlässigen Abdeckungen 5, 6 eingebettet, wobei die dem Laser 2 zugewandte Abdeckung als "hintere" Abdeckung bezeichnet wird, wogegen die Abdeckung an der Seite des Phosphors, an welcher das konvertierte Licht abgestrahlt wird, "vordere" genannt wird. Die Abdeckungen können im Prinzip Glasplatten sein, wobei jedenfalls die hintere Abdeckung 5 für die Laserwellenlänge transparent sein muss und die vordere Abdeckung für Licht des gesamten sichtbaren Bereichs durchlässig sein soll. Möglich ist es auch, dass die "hintere" Abdeckung nicht nur für den Laser transparent ist, sondern dass die vom Phosphor emittierte Strahlung reflektiert wird. In diesem Fall wird das Licht aus dem hinteren Halbraum auch nach vorne gebracht.

Für die Abdeckungen 5, 6 kommen vielerlei Materialien in Frage, wie Kunststoffe, Glas, Silikon etc., wobei es allerdings wünschenswert bzw. oft auch erforderlich ist, dass diese Materialien eine gute Wärmeleitfähigkeit besitzen Da nicht die gesamte eingestrahlte Laserlicht in sichtbares Licht konvertiert wird entsteht in dem Phosphor Verlustwärme, die, wenn nicht hinreichend abgeführt, zu einer thermischen Zerstörung des Phosphors führt. Aus diesem Grund wird beispielsweise häufig Saphir oder Zirkon verwendet. Ein Projektionssystem 9, das hier als Linse ausgebildet und nur teilweise dargestellt ist, projiziert das Leuchtbild des Phosphors 4 auf die Fahrbahn.

Nach dem Stand der Technik sind die Abdeckungen 5, 6 meist planparallel Platten, mit einer dazwischenliegenden Lage Phosphor, die am Rand gegen die Umwelt abgedichtet sein kann.

Demgegenüber sieht die Erfindung nun vor, dass die vordere, in Abstrahlrichtung gelegene lichtdurchlässige Abdeckung 6 des Phosphors 4 als lichtformendes, nämlich lichtbündelndes Element gestaltet ist. Bei der Ausführung nach Fig. 1 weist die vordere Abdeckung 6 deutlich erkennbar eine Sammellinse mit einer konvexen Außenseite 7 auf. Genauer gesagt ist im gezeigten Beispiel die vordere Abdeckung als Sammellinse ausgebildet bzw. ist die Sammellinse einstückig mit der vorderen Abdeckung. Optisch gesehen wird somit eine Primäroptik so nahe wie möglich an die lichtabstrahlende Fläche, nämlich den Phosphor 4, gerückt, welche das Licht gebündelt nach vorne richtet und die am Rande auftretenden Verluste verhindert bzw. wird der Bauraumbedarf des Systems verkürzt.

In Fig. 2 sind die prinzipiellen geometrischen Verhältnisse einer Lichtkonversionseinheit gemäß der Erfindung kurz und vereinfacht dargestellt, wobei gezeigt sind: der von dem Laserstrahl angeregte Phosphor 4, hier als konkav-konvexe Linse ausgebildete Abdeckung 6, das als konkav-konvexe Linse ausgebildete Projektionssystem 9 und ein virtuelles Zwischenbild 4v des Phosphors 4, Mit a ist die optische Achse der Anordnung bezeichnet. Die Position des Zwischenbildes 4v, nämlich ihr Abstand b hinter dem Phosphor 4, ergibt sich entsprechend der Linsengleichung $\frac{1}{f} = \frac{1}{g} + \frac{1}{b}$ mit b = g . f / (g-f), wobei f die Brennweite der Linse (Abdeckung) 6 bedeutet und g die Gegenstandsweite, nämlich den Abstand des Phosphors 4 von der Hauptebene der Linse (Abdeckung) 6. Aus der Linsengleichung B/G = b/g ergibt sich die Größe B des Zwischenbildes zu B = G.b/ g, wobei mit G die Größe des Phosphors 4 bezeichnet ist.

Die Abdeckung 6 des Phosphors 4 wirkt somit wie eine Linse in einem Zweilinsensystem, wobei das virtuelle, vergrößerte Bild 4v des Phosphors 4 erzeugt und durch das Projektionssystem 9, das z.B. auch ein Reflektor sein könnte, auf die Fahrbahn abgebildet wird.

Man erkennt, dass die Bildung des virtuellen Zwischenbildes 4v zu einer Faltung der Strahlengänge und folglich zu einer Verkürzung des Bauraums führt, so dass der Scheinwerfer kompakter gebaut werden kann.

ES sei nochmals angemerkt, dass Fig. 2 eine grob schematische Darstellung ist, in welcher beispielsweise die hintere Abdeckung des Phosphors 4 nicht gezeigt ist. Maßstäblichkeit im Hinblick auf praktische Ausführungsformen ist gleichfalls nicht vorhanden. So ist beispielsweise der Abstand g des Phosphors 4 von der Linse 6 übertrieben groß dargestellt.

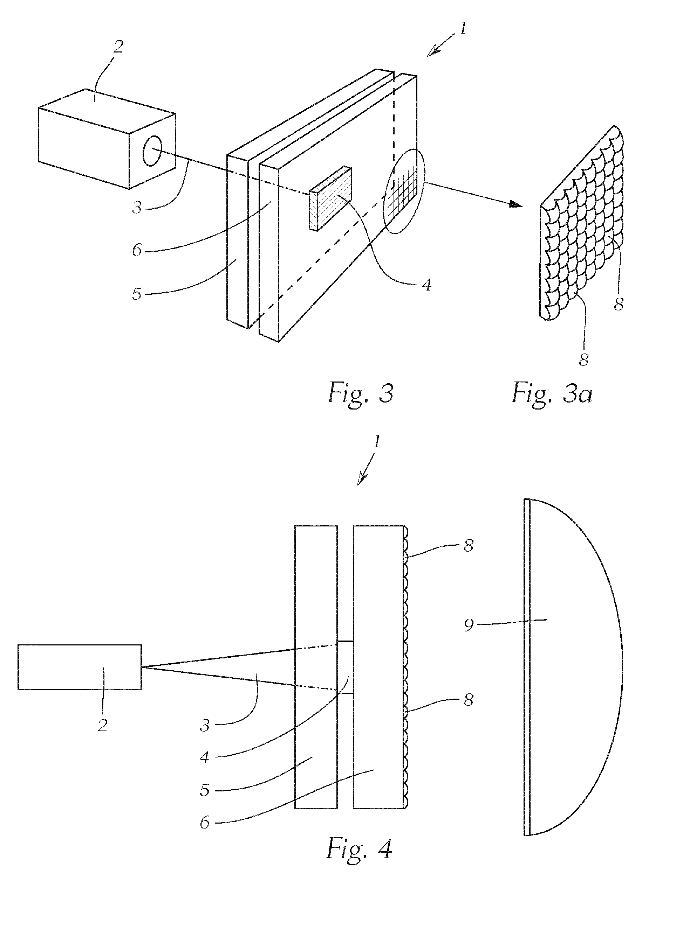

Fig. 3 zeigt eine Variante der Erfindung, bei welcher an der Vorderseite der vorderen Abdeckung 6 eine Vielzahl von Einzellinsen 8 ausgebildet ist, die hier nur in dem vergrößerten Ausschnitt nach Fig. 2a dargestellt sind. Man kann die Einzellinsen 8, die zweckmäßigerweise mit der Abdeckung 6 einstückig ausgebildet sind, auch als Mikrolinsen bezeichnen, da ihre Abmessungen üblicherweise in einem Größenbereich von beispielsweise 0,1 bis 1 mm liegen. Die Einzellinsen sind hier gleich ausgebildet und ihre optischen Achsen verlaufen parallel zueinander. Auch bei dieser Ausbildung wird der lambertsche Abstrahlcharakteristik entgegengewirkt, denn jede Einzellinse 8 bildet einen Teil eines eigenen, primären Projektionssystems, welches das divergente Licht von einem Punkt am Phosphor zu einem annähernd parallelen Strahlenbündel zusammenfasst. Die Einzellinsen 8 müssen nicht notwendigerweise einstückig mit der vorderen Abdeckung 6 ausgebildet sein, vielmehr könnten sie als Plättchen mit Einzellinsen auf die vordere Abdeckung aufgesetzt sein - ähnlich dem in Fig. 3a gezeigten Detail. In Fig. 3 nicht gezeigt ist die zur Projektion des auf dem Phosphor 4 erzeugten Leuchtbildes auf die Fahrbahn erforderliche Optik 9.

Die Seitenansicht der Fig. 4 zeigt eine gemäß Fig. 3 ausgebildete und zuvor beschriebene Lichtkonversionseinheit 1 eines Scheinwerfers gemäß der Erfindung mit der Lasereinheit 2, welche einen hier aufgeweiteten Laserstrahl 3 auf den Phosphor 4 sendet, sowie das Projektionssystem 9, hier eine Projektionslinse, um ein auf dem Phosphor erzeugtes Leuchtbild auf die Fahrbahn zu projizieren.

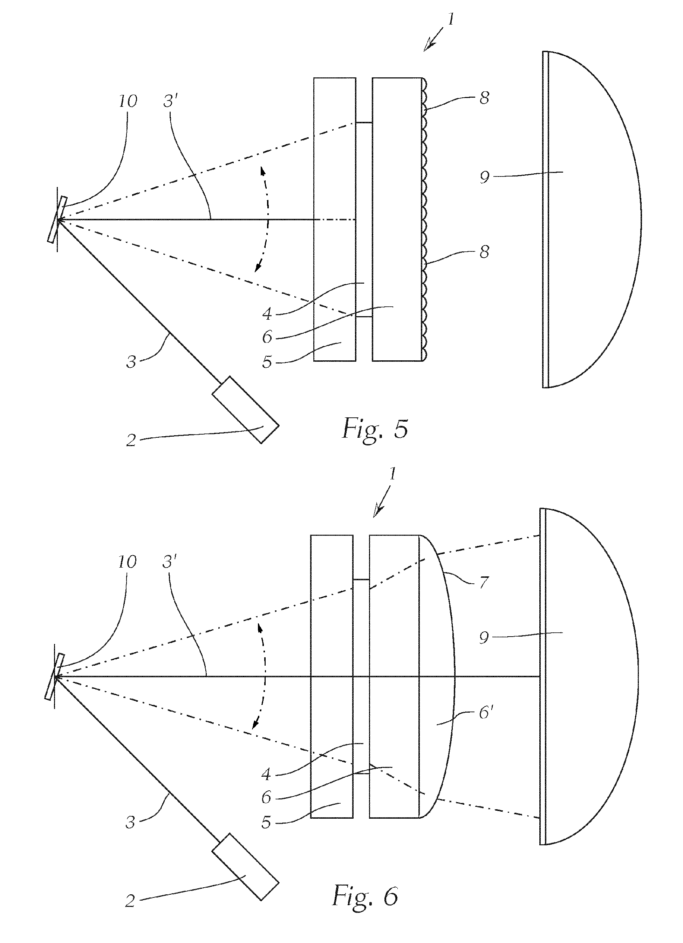

Die in Fig. 5 dargestellte Variante zeigt eine Ausführungsform, bei welcher der Strahl 3 einer Lasereinheit 2 in bekannter Weise über ein hier als Mikrospiegel ausgebildetes Strahlablenkmittel 10 umgelenkt und als scannender Strahl 3'auf den Phosphor 4 gerichtet wird, auf welchem er ein Leuchtbild erzeugt. Im vorliegenden Beispiel kann ein um zwei Achsen schwingender Mikrospiegel 10 verwendet werden, der von einer nicht gezeigten Ansteuerung angesteuert und z.B. in zwei zueinander orthogonalen Richtungen in Schwingungen versetzt wird, wobei diese Schwingungen insbesondere den mechanischen Eigenfrequenzen des Mikrospiegels entsprechen können. Die Ansteuerung von Mikrospiegeln ist bekannt und kann auf vielerlei Art erfolgen, z.B. elektrostatisch oder elektrodynamisch. An Stelle eines Mikrospiegels könnten auch andere Ablenkeinrichtungen, wie bewegliche Linsen oder Lichtleitfasern eingesetzt werden. Abgesehen von der scannenden Beleuchtung des Phosphors 4 mit Laserlicht entspricht diese Ausführungsform jener nach Fig. 4 und sie besitzt gleichfalls eine Projektionslinse 9, um das auf dem Phosphor erzeugte Leuchtbild auf die Fahrbahn zu projizieren.

Fig. 6 zeigt gleichfalls eine Ausführung mit einem scannenden Laserstrahl 3' entsprechend Fig. 5, wobei gleiche Teile mit gleichen Bezugszeichen versehen sind. Im Gegensatz zu Fig. 5 ist an der vorderen Abdeckung 6 jedoch eine Sammellinse 6' angeordnet, die hier jedoch nicht - wie in Fig. 1 - einstückig mit der vorderen Abdeckung 6 ist.

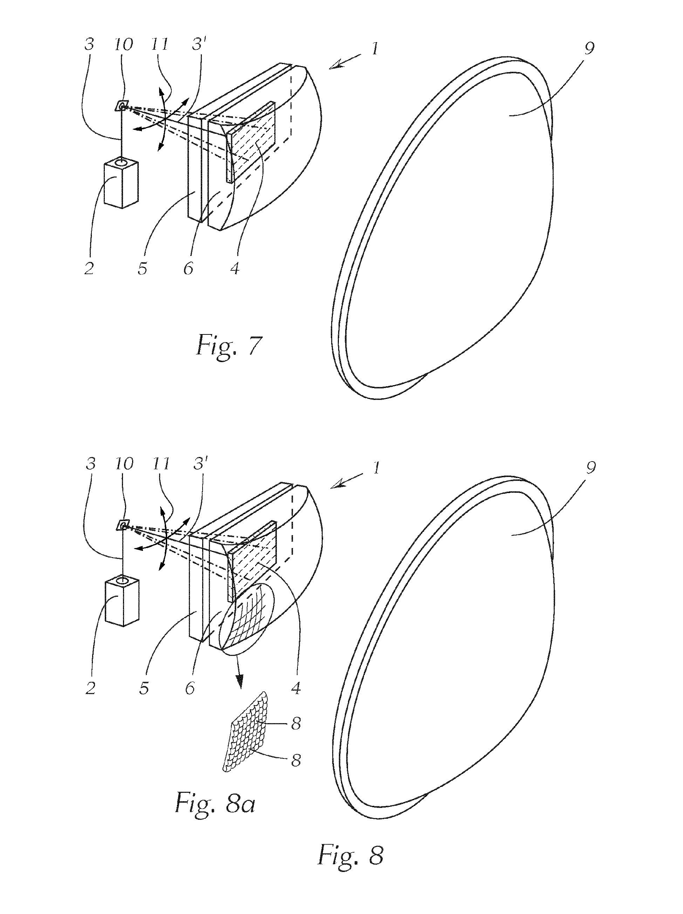

Die Ausführung nach Fig. 6 ist zur besseren Veranschaulichung in Fig. 7 perspektivisch gezeigt, mit jener Ausnahme zu Fig. 6, dass in Fig. 7 Sammellinse und vordere Abdeckung einstückig sind. Man erkennt in dieser Abbildung deutlich die scannende Bewegung des an dem Mikrospiegel 10 des Strahlablenkmittels 10 umgelenkten Laserstrahls 3' in zwei Koordinatenrichtungen, was durch Pfeile 11 verdeutlicht ist.

Es sei an dieser Stelle angemerkt, dass auch die hintere Fläche der vorderen Abdeckung 6 gekrümmt sein kann - vgl. Fig. 2 -, wobei auch der Phosphor 4 sowie die hintere Abdeckung 5 eine entsprechende Krümmung aufweisen können.

In Fig. 8 ist schließlich gezeigt, dass eine Variante der Ausführung nach Fig. 7 möglich ist, bei welcher an der konvexen Außenseite 7 der als Sammellinse ausgebildeten vorderen Abdeckung 6 Mikrolinsen 8 vorgesehen sein können (siehe auch das Detail nach Fig. 8a), sodass hier eine Kombination einer Linse mit Mikrolinsen vorliegt, die in besonderen Fällen den lichttechnischen Gestaltungsspielraum erweitert.

Wenngleich die in den vorgehenden Beispielen gezeigten einzelnen Mikrolinsen 8 zweckmäßigerweise identisch ausgebildet sind, kann es gleichfalls zur Vergrößerung der lichttechnischen Gestaltungsfreiheit sinnvoll sein, die Mikrolinsen 8 unterschiedlich zu gestalten, sei es beispielsweise bezüglich ihrer Abmessungen oder Brennweiten.

## Patentansprüche

1. Scheinwerfer für Kraftfahrzeuge mit zumindest einer Lasereinheit (2), bestehend aus einem Laser (2a) und einer nachgeordneten Optik (2b), deren Laserstrahlung (3, 3') auf zumindest eine Lichtkonversionseinheit (1) gelenkt wird, welches einen zwischen zwei Abdeckungen eingeschlossenen Phosphor (4) zur Lichtkonversion aufweist, und mit einem Projektionssystem (9) zur Projektion des an der zumindest einen Lichtkonversionseinheit erzeugten Leuchtbildes auf die Fahrbahn,
**dadurch gekennzeichnet, dass**
eine vordere, in Abstrahlrichtung vorne gelegene lichtdurchlässige Abdeckung (6) des Phosphors (4) als lichtformendes Element gestaltet ist.

2. Scheinwerfer nach Anspruch 1, **dadurch gekennzeichnet, dass** die vordere Abdeckung (6) eine Sammellinse (6') aufweist.

3. Scheinwerfer nach Anspruch 2, **dadurch gekennzeichnet, dass** die Sammellinse (6') mit der vorderen Abdeckung (6) einstückig ausgebildet ist.

4. Scheinwerfer nach Anspruch 2 oder 3, **dadurch gekennzeichnet, dass** die vordere Außenseite (7) der Sammellinse (6, 6') konvex ist.

5. Scheinwerfer nach einem der Ansprüche 1 bis 4, **dadurch gekennzeichnet, dass** an der Vorderseite der vorderen Abdeckung (6) eine Vielzahl von Einzellinsen (8) vorgesehen ist.

6. Scheinwerfer nach Anspruch 5, **dadurch gekennzeichnet, dass** die Einzellinsen (8) mit der vorderen Abdeckung (6) einstückig ausgebildet sind.

7. Scheinwerfer nach Anspruch 5 oder 6, **dadurch gekennzeichnet, dass** die Einzellinsen (8) gleich ausgebildet sind und ihre optischen Achsen parallel zueinander verlaufen.

8. Scheinwerfer nach einem der Ansprüche 1 bis 7, **dadurch gekennzeichnet, dass** die dem Phosphor (4) zugewandte Fläche der vorderen Abdeckung (6) im Wesentlichen eben ist.

9. Scheinwerfer nach einem der Ansprüche 1 bis 8, **dadurch gekennzeichnet, dass** ein von einer Ansteuerung angesteuertes Strahlablenkmittel (10) vorgesehen ist, über welches der Laserstrahl (3) der zumindest einen Laserlichtquelle (2) umgelenkt und als scannender Laserstrahl (3') auf den Phosphor (4) der zumindest einen Lichtkonversionseinheit (1) gelenkt wird.

10. Scheinwerfer nach Anspruch 9, **dadurch gekennzeichnet, dass** das Strahlablenkmittel (10) als Mikrospiegel ausgebildet ist.

*Fig. 1*

*Fig. 2*

Fig. 3

Fig. 3a

Fig. 4

Fig. 5

Fig. 6

Fig. 7

Fig. 8a

Fig. 8

Europäisches
Patentamt

European
Patent Office

Office européen
des brevets

**EUROPÄISCHER RECHERCHENBERICHT**

Nummer der Anmeldung

EP 15 17 9528

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2014/028982 A1 (HADRATH STEFAN [DE]) 30. Januar 2014 (2014-01-30) * Absätze [0050] - [0060]; Abbildungen 1, 2 * ----- | 1-4,8-10 | INV. F21S8/12 |
| X | US 2006/126023 A1 (TAN CHINH [US] ET AL) 15. Juni 2006 (2006-06-15) * Absätze [0054] - [0059]; Abbildungen 1-11 * ----- | 1,5-10 | |
| X | WO 2013/183253 A1 (DENSO CORP) 12. Dezember 2013 (2013-12-12) * das ganze Dokument * ----- | 1,5-10 | |
| A | WO 2009/115976 A1 (KONINKL PHILIPS ELECTRONICS NV [NL]; KRIJN MARCELLINUS P C M [NL]; VAL) 24. September 2009 (2009-09-24) * das ganze Dokument * ----- | 1-10 | |

RECHERCHIERTE
SACHGEBIETE (IPC)

F21S
G02B

Der vorliegende Recherchenbericht wurde für alle Patentansprüche erstellt

| Recherchenort | Abschlußdatum der Recherche | Prüfer |
|---|---|---|
| München | 14. Dezember 2015 | Sarantopoulos, A |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
   Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 15 17 9528

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-12-2015

| Im Recherchenbericht angeführtes Patentdokument | Datum der Veröffentlichung | Mitglied(er) der Patentfamilie | Datum der Veröffentlichung |
|---|---|---|---|
| US 2014028982 A1 | 30-01-2014 | CN 103576322 A<br>DE 102012213311 A1<br>US 2014028982 A1 | 12-02-2014<br>30-01-2014<br>30-01-2014 |
| US 2006126023 A1 | 15-06-2006 | CN 101263420 A<br>DE 112006000275 T5<br>JP 4671443 B2<br>JP 2008529070 A<br>US 2006126023 A1<br>WO 2006081297 A2 | 10-09-2008<br>13-12-2007<br>20-04-2011<br>31-07-2008<br>15-06-2006<br>03-08-2006 |
| WO 2013183253 A1 | 12-12-2013 | DE 112013002801 T5<br>JP 5724949 B2<br>JP 2013254031 A<br>KR 20150003906 A<br>US 2015198802 A1<br>WO 2013183253 A1 | 05-03-2015<br>27-05-2015<br>19-12-2013<br>09-01-2015<br>16-07-2015<br>12-12-2013 |
| WO 2009115976 A1 | 24-09-2009 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20120140504 A1
- EP 2063170 A2
- DE 102012206970 A1